# EUROPÄISCHE PATENTSCHRIFT

(11) **EP 1 623 811 B1**
(45) Veröffentlichungstag und Bekanntmachung des Hinweises auf die Patenterteilung: **13.08.2008**
(21) Anmeldenummer: 05016742.8
(22) Anmeldetag: 02.08.2005
(51) Int. Cl.: B29C 45/32

(54) **Spritzgusswerkzeug zur Herstellung von Kunststoffteilen, insbesondere derartiges Werkzeug zum Herstellen von zwei Kunststoffleisten verbindenden Spritzguss-Eckverbindungsteilen**
Injection mould for producing a plastic part, especially mould for producing an injection moulded connecting angle for plastic profiles
Moule d'injection pour produire des pièces en matière plastique, en particulier moule d'injection pour produire un angle de connexion entre des profilés en matière plastique

(30) Priorität: 07.08.2004 DE 102004038468
(43) Veröffentlichungstag der Anmeldung: 08.02.2006
(73) Patentinhaber: REHAU AG + Co, 95111 Rehau (DE)
(72) Erfinder: Summerer, Wolfgang, 95111 Rehau (DE); Fischer, André, 95213 Münchberg (DE)

(56) Entgegenhaltungen:
- WO-A-88/00122
- CH-A5- 625 461
- FR-A- 2 332 409
- US-A- 4 249 882
- IWASAWA T: "PROGRESSES OF AUTOMATIC MOLDS PART I HOT RUNNER SYSTEM (3)" JAPAN PLASTICS AGE, PLASTICS AGE CO LTD. TOKYO, JP, Bd. 12, Nr. 6, Juni 1974 (1974-06), Seiten 42-46, XP001176363

## Beschreibung

Die Erfindung betrifft ein Spritzgusswerkzeug zur Herstellung von Kunststoffteilen nach dem Oberbegriff des Anspruchs 1. Ferner betrifft die Erfindung ein derartiges Werkzeug zum Herstellen von zwei Kunststoffleisten verbindenden Spritzguss-Eckverbindungsteilen nach dem Oberbegriff des Anspruchs 8.

Derartige Werkzeuge sind durch offenkundige Vorbenutzung bekannt. Aufgrund des relativ geringen Teiledurchsatzes dieser Werkzeuge ist die Herstellung der Kunststoffteile kostenaufwendig.

Die US 4,249,882 offenbart ein Spritzgusswerkzeug zur Herstellung von Kunststoffteilen mit zwei Werkzeugteilen, die in Schließstellung des Spritzgusswerkzeugs eine Spritzgussform begrenzen. Ein drittes Werkzeugteil ist auf der dem ersten Werkzeugteil gegenüberliegenden Seite des zweiten Werkzeugteils angeordnet und begrenzt mit diesem eine weitere Spritzgussform. Relativbewegungen der Werkzeugteile zueinander werden über Führungseinrichtungen geführt.

Es ist eine Aufgabe der Erfindung, ein Spritzgusswerkzeug der eingangs genannten Art derart weiterzubilden, dass ein höherer Durchsatz gewährleistet ist.

Diese Aufgabe ist erfindungsgemäß gelöst durch ein Spritzgusswerkzeug mit den im de Anspruch 1 angegebenen Merkmalen.

Erfindungsgemäß wurde erkannt, dass die Ausgestaltung eines Spritzgusswerkzeugs mit zwei Führungseinrichtungen zur getrennten Führung der Verlagerungsbewegungen zwischen den insgesamt drei Werkzeugteilen die Möglichkeit schafft, in einem Spritzarbeitsgang zwei Spritzgussformen zu befüllen. Dies verdoppelt den Teiledurchsatz des Spritzgusswerkzeugs je Spritzschritt, da nun pro Spritzschritt zwei Kunststoffteile erzeugt werden. Eine Einspritzkanalgestaltung mit einem zufuhrseitig gemeinsamen Haupt-Einspritzkanal für beide Spritzgussformen, der sich hin zu den Spritzgussformen in zwei Einzelkanäle aufteilt, vereinfacht die zufuhrseitige Auslegung einer Führung für fließfähigen Kunststoff. Es muss nur ein Anschluss des Spritzgusswerkzeuges an eine Quelle für fließfähigen Kunststoff vorgesehen sein.

Die fertig gespritzten Kunststoffteile können manuell oder auch automatisch entnommen werden. Zur Entnahme der Kunststoffteile kann auch ein Auswerfen aus der Spritzgussform gehören, wie dies an sich bekannt ist.

Die Auslegung des Spritzgusswerkzeugs ist nicht auf drei Werkzeugteile mit zwei Spritzgussformen beschränkt. Auch eine mehretagige Ausgestaltung mit drei oder mehr Spritzgussformen ist möglich.

Die Ausgestaltung der Führungseinrichtungen nach Anspruch 2 stellt sicher, dass sich die Führungseinrichtungen nicht gegenseitig stören. Dies vereinfacht die konstruktive Auslegung der Führungseinrichtungen, da insbesondere die Bauhöhe der Führungseinrichtungen längs der Führungs-Hauptrichtung keinen strengen Anforderungen unterliegt. Insbesondere kann ein Verlagerungshub zwischen der Offen- und der Schließstellung bereitgestellt werden, der größer ist als die Ausdehnung der Werkzeugteile längs der Verlagerungsbewegung.

Führungseinrichtungen nach Anspruch 3 gewährleisten eine definierte und exakte Führung und lassen sich zudem kostengünstig fertigen.

Die Ausgestaltung eines Anschlags gemäß Anspruch 4 gewährleistet in unaufwendiger Weise eine definierte Verlagerung des Spritzgusswerkzeugs zwischen der Schließ- und der Offenstellung. Ein unerwünschtes Freikommen von Werkzeugteilen von den Führungseinrichtungen wird vermieden.

Mindestens ein Schieber nach Anspruch 5 ermöglicht es, hinterschnittige Kunststoffteile mittels Spritzguss zu formen.

Ein pneumatischer Zylinder nach Anspruch 6 ist robust und stellt ein kostengünstiges Anbauteil dar.

Eine Stiftführungsanordnung nach Anspruch 7 benötigt keinen zusätzlichen Antrieb bei der Schieberverlagerung.

Eine weitere Aufgabe der Erfindung ist es, die gewünschte Durchsatzerhöhung auch bei einem Werkzeug zur Herstellung von zwei Kunststoffleisten verbindenden Spritzguss-Eckverbindungsteilen zu gewährleisten.
Derartige Kunststoffteile sind nach dem Spritzguss des Eckverbindungsteils sehr sperrig handzuhaben, da das erzeugte Eckverbindungsteil gemeinsam mit den beiden angeformten Kunststoffleisten transportiert werden muss.

Diese weitere Aufgabe ist erfindungsgemäß gelöst durch ein Werkzeug mit den im Kennzeichnungsteil des Anspruchs 8 angegebenen Merkmalen.

Die erfindungsgemäße Anordnung der Führungseinrichtungen stellt sicher, dass auch sperrige Kunststoffteile von den Führungseinrichtungen weg entnommen werden können, ohne dass die Führungseinrichtungen bei dieser Entnahme störend im Weg sind.

Ein Ausführungsbeispiel der Erfindung wird nachfolgend anhand der Zeichnung näher erläutert. In dieser zeigen:
- Fig. 1: eine perspektivische Ansicht eines Spritzgusswerkzeugs mit drei Werkzeugteilen in einer Schließstellung zur Herstellung von zwei Kunststoffleisten verbindenden Spritzguss-Eckverbindungsteilen;
- Fig. 2: das Spritzgusswerkzeug nach Fig. 1 in einer Zwischenstellung, in der ein oberes Werkzeugteil von einem mittleren Werkzeugteil abgehoben ist, sodass ein gespritztes Kunststoffteil aus der zwischen diesen Werkzeugteilen gebildeten Spritzgussform entnommen werden kann;
- Fig. 3: das Spritzgusswerkzeug nach Fig. 1 in einer Offenstellung, bei der auch das mittlere Werkzeugteil vom unteren Werkzeugteil abgehoben ist, sodass ein gespritztes Kunststoffteil auch aus einer zweiten Spritzgussform entnommen werden kann welche zwischen dem mittleren und dem unteren Werkzeugteil gebildet ist;
- Fig. 4: vergrößert das Spritzgusswerkzeug in der Stellung nach Fig. 1 in einem vertikalen Schnitt, welcher Führungseinrichtungen zeigt, die die Verlagerungsbewegungen der Werkzeugteile zwischen den in den Fig. 1 bis 3 dargestellten Momentanstellungen führen;
- Fig. 5: einen zu Fig. 4 ähnlichen Schnitt durch das Spritzgusswerkzeug in der Stellung nach Fig. 2;
- Fig. 6: einen zu Fig. 4 ähnlichen Schnitt durch das Spritzgusswerkzeug in der Stellung nach Fig. 3,
- Fig. 7: weiter vergrößert einen vertikalen Schnitt durch das Spritzgusswerkzeug nach Fig. 1 längs einer Einspritzkanäle des Spritzgusswerkzeugs aufweisenden Mittelebene von diesem;
- Fig. 8: vergrößert einen durch einen Kreis gekennzeichneten Detailausschnitt aus Fig. 7, welcher eine der beiden Spritzgussformen des Spritzgusswerkzeugs zeigt;
- Fig. 9: vergrößert in einer perspektivischen Ansicht das obere Werkzeugteil des Spritzgusswerkzeugs nach Fig. 1, von der oberen Spritzgussform her gesehen;
- Fig. 10: vergrößert in einer perspektivischen Darstellung das mittlere und untere Werkzeugteil des Spritzgusswerkzeugs in einer zu Fig. 2 ähnlichen Stellung, ebenfalls von der oberen Spritzgussform her gesehen;
- Fig. 11: eine perspektivische Ansicht eines mit dem Spritzgusswerkzeug nach Fig. 1 hergestellten Eckverbindungsteils ohne zugehörige Kunststoffleisten; und
- Fig. 12: eine Ansicht eines mit dem Spritzgusswerkzeug nach Fig. 1 hergestellten Kunststoffteils mit dem Eckverbindungsteil nach Fig. 11, welches durch Spritzguss an die beiden Kunststoffleisten angeformt ist.

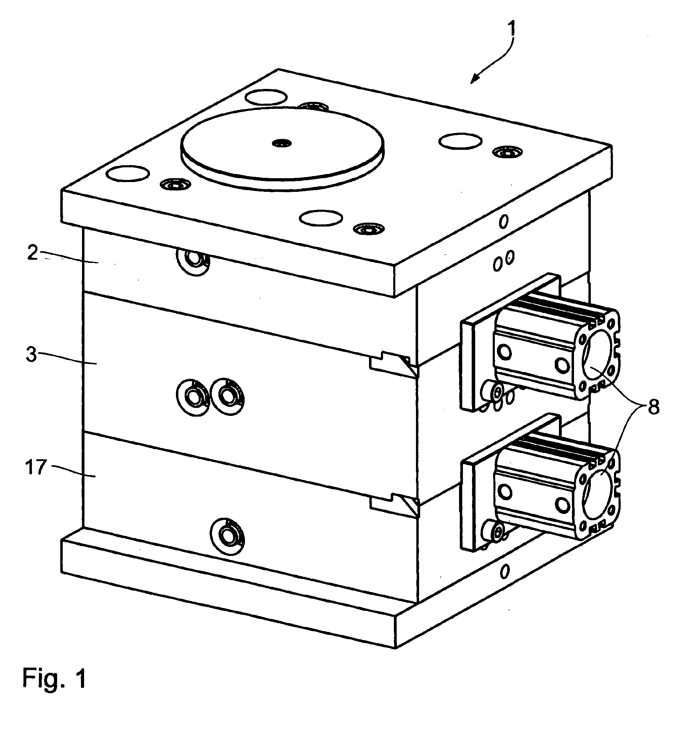

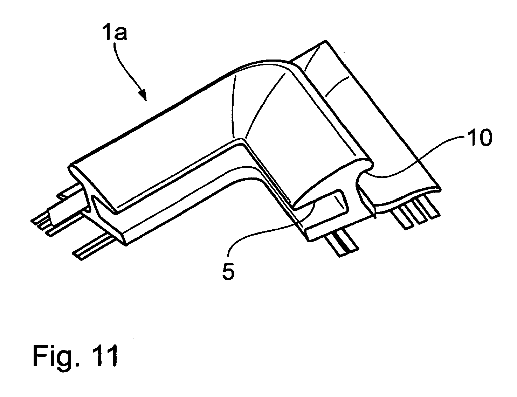

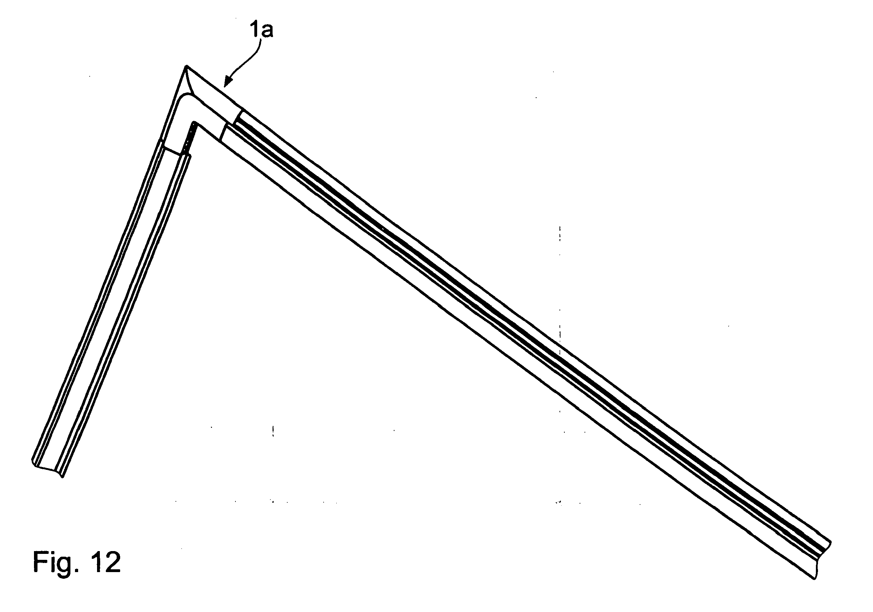

Ein in den Fig. 1 bis 10 dargestelltes Spritzgusswerkzeug 1 dient zur Herstellung von Kunststoffteilen 1 a in Form von zwei Kunststoffleisten verbindenden Spritzguss-Eckverbindungsteilen (vgl. Fig. 11, Kunststoffleisten weggelassen, sowie Fig. 12 mit Kunststoffleisten). Die auf diese Weise hergestellten Kunststoffteile 1 a sind Bestandteile eines um eine Glasscheibe umlaufenden Kunststoff-Profilrahmens, der zum Beispiel im Kraftfahrzeugbau, beispielsweise bei der Heckscheibe, Verwendung findet.

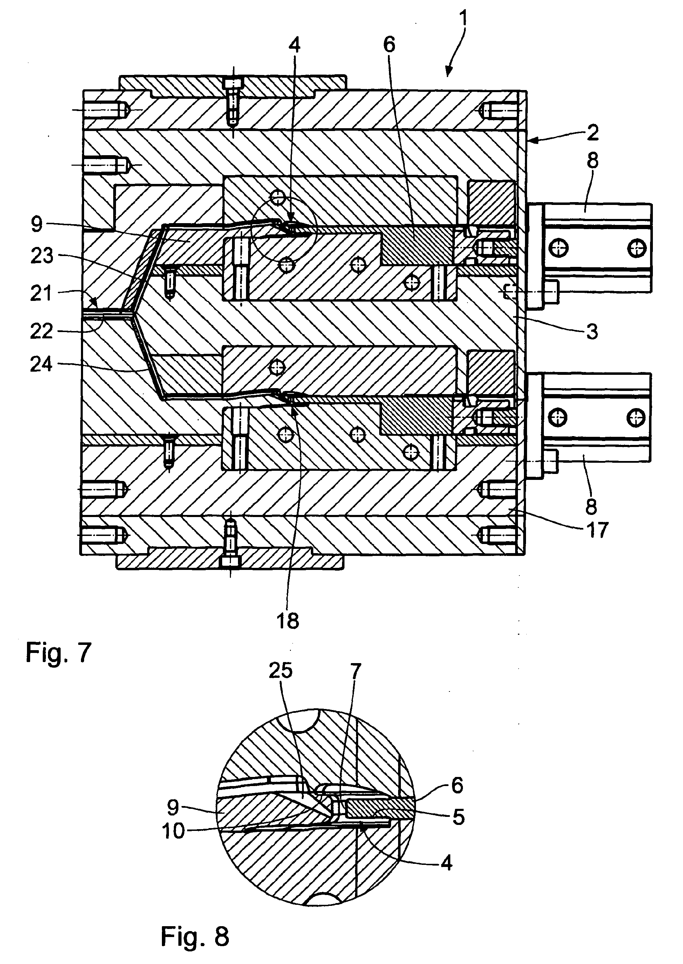

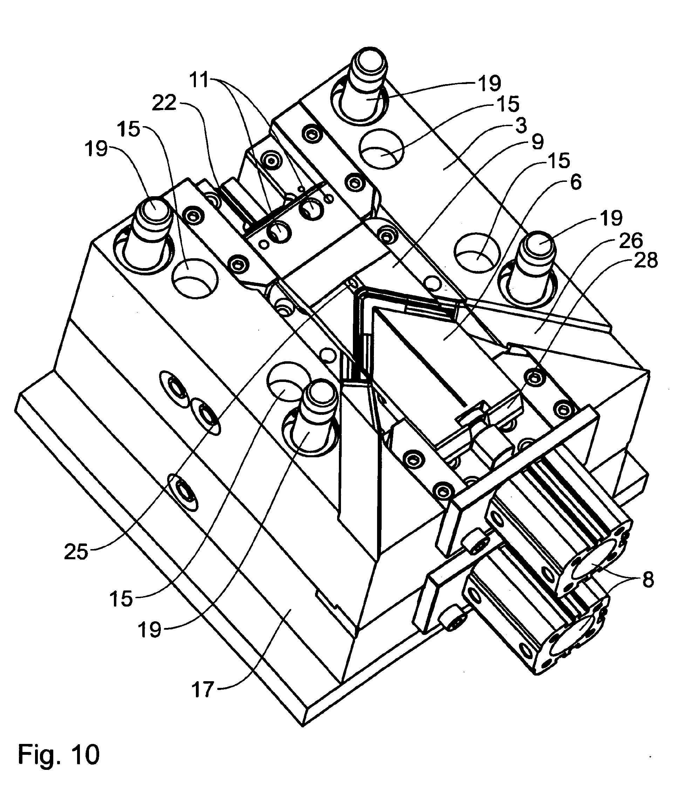

Das Spritzgusswerkzeug 1 umfasst ein erstes, oberes Werkzeugteil 2 in Form einer ersten Werkzeugplatte. Weiterhin umfasst das Spritzgusswerkzeug 1 ein zweites, mittleres Werkzeugteil 3, ebenfalls in Form einer Werkzeugplatte. Das zweite Werkzeugteil 3 begrenzt mit dem ersten Werkzeugteil 2 in einer in den Fig. 1, 4 und 7 dargestellten Schließstellung des Spritzgusswerkzeugs 1 eine erste Spritzgussform 4. Letztere ist im Querschnitt im Detail in Fig. 8 dargestellt. Aus diesem Querschnitt ergibt sich das Profil des hergestellten Eckverbindungsteils 1 a. Dieses Profil weist eine Glasnut 5 (vgl. auch Fig. 11) zur späteren Aufnahme der einzurahmenden Glasscheibe auf. Die Glasnut 5 wird in der Spritzgussform 4 von einem Schieber 6 begrenzt. Dieser bildet mit seiner der Spritzgussform 4 zugewandten Stirnwand 7 die abgerundete 90°-Ecke des herzustellenden Eckverbindungsteils ab. Aus der Aufsicht des zweiten Werkzeugteils 3 des Spritzgusswerkzeugs 1 nach Fig. 10 ist ersichtlich, dass diese 90°-Ecke der Stirnwand 7 in einer Trennebene 6a zwischen dem ersten Werkzeugteil 2 und dem zweiten Werkzeugteil 3 verläuft.

Der Schieber 6 ist zwischen einer in den Fig. 7, 8 und 10 gezeigten Begrenzungsstellung und einer Offenstellung verlagerbar. In der Offenstellung des Schiebers 6 kann ein fertig gespritztes Kunststoffteil 1 a am Schieber 6 vorbei aus der ersten Spritzgussform 4 entnommen werden. Die Verlagerungsbewegung des Schiebers 6 parallel zur Trennebene 6a zwischen der Begrenzungs- und der Offenstellung ist relativ zum zweiten Werkzeugteil 3 geführt. Angetrieben wird die Verlagerung des Schiebers 6 von einem pneumatischen Zylinder 8, der seitlich am zweiten Werkzeugteil 3 angeflanscht ist.

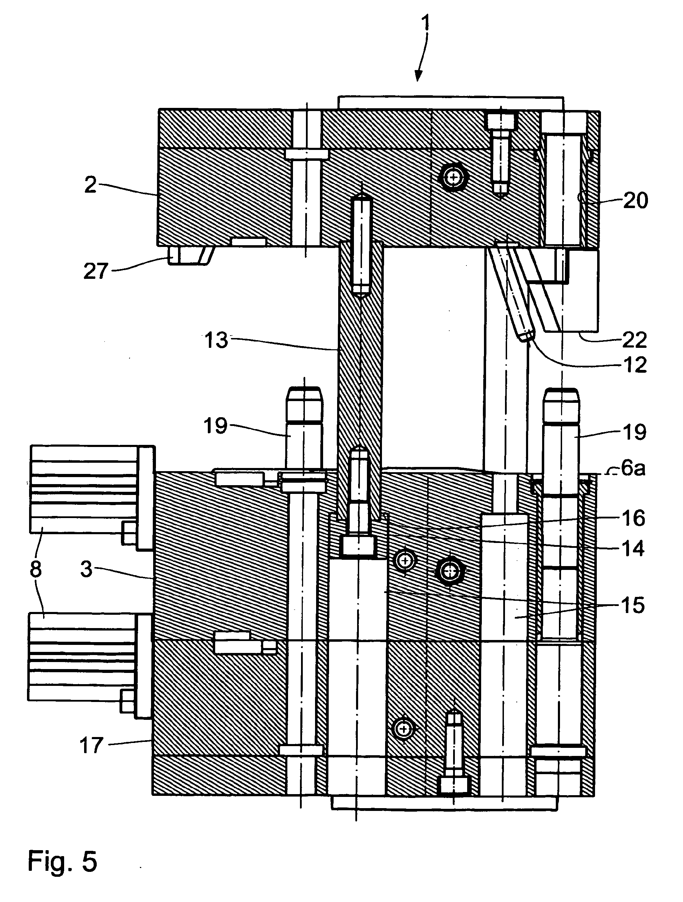

Gegenüberliegend zum ersten Schieber 6 wird die erste Spritzgussform 4 von einem zweiten Schieber 9 begrenzt. Letzterer begrenzt in einer Begrenzungsstellung, die in den Fig. 7, 8 und 10 dargestellt ist, einen Formabschnitt der ersten Spritzgussform 4, der zur Formung einer Befestigungs-Rastnut 10 (vgl. Fig. 11) des Eckverbindungsteils dient. Wie die Ansicht der Fig. 10 zeigt, weist der zweite Schieber 9 eine zum ersten Schieber 6 komplementäre 90° Eckform auf. Die Verlagerungsbewegung des zweiten Schiebers 9 parallel zur Trennebene 6a zwischen der Begrenzungsstellung und einer Offenstellung, in der eine Entnahme des gespritzten Kunststoffteils am zweiten Schieber 9 vorbei aus der ersten Spritzgussform 4 ermöglicht ist, ist relativ zum zweiten Werkzeugteil 3 geführt. Diese Verlagerungsbewegung ist mechanisch angetrieben durch eine Schrägstift/Stiftführungsanordnung, zu der zwei nebeneinander liegende Stiftführungsbohrungen 11 im zweiten Schieber 9 gehören, in welche am ersten Werkzeugteil 2 festgelegte Schrägstifte 12 eingreifen, die in den Fig. 5, 6 und 9 dargestellt sind.

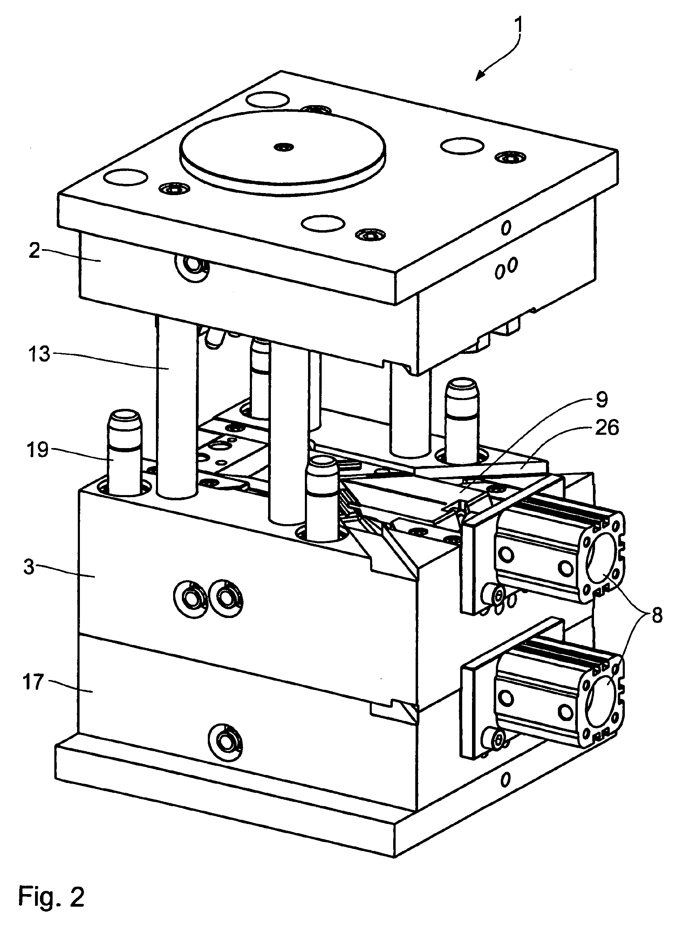

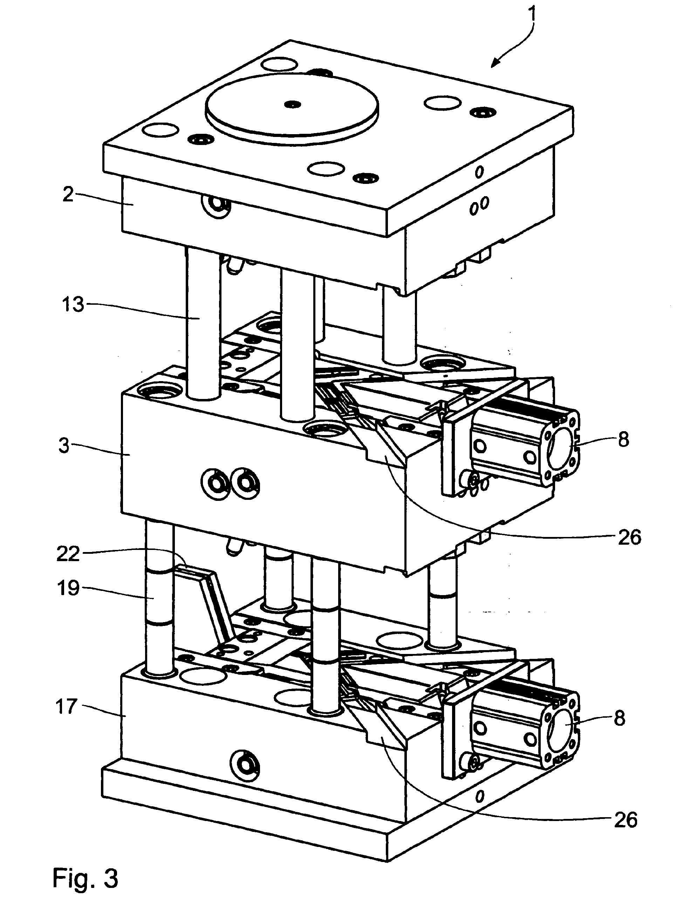

Die Schrägstift/Stiftführungsanordnung treibt die Verlagerungsbewegung des zweiten Schiebers 9 an, wenn das erste Werkzeugteil 2 relativ zum zweiten Werkzeugteil 3 senkrecht zur Trennebene 6a zwischen der Schließstellung und einer zum Beispiel in den Fig. 2 und 3 dargestellten Offenstellung verlagert wird, in welcher das gespritzte Kunststoffteil 1a aus der ersten Spritzgussform 4 entnommen werden kann.

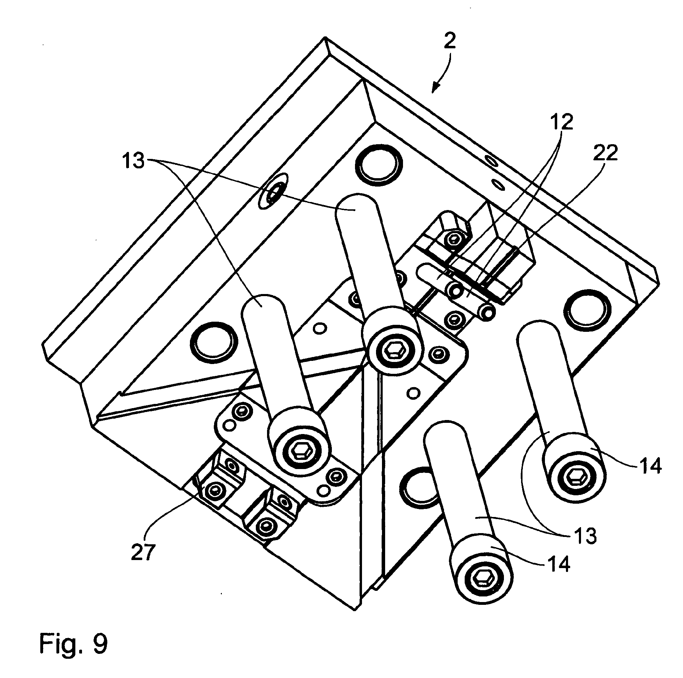

Zur Führung der Verlagerungsbewegung des ersten Werkzeugteils 2 zum zweiten Werkzeugteil 3 dient eine Führungseinrichtung. Diese weist insgesamt vier am ersten Werkzeugteil 2 festgelegte und senkrecht zur Trennebene 6a verlaufende Führungsbolzen 13 als jeweils erstes Führungselement auf. Die vier Führungsbolzen 13 sind in einem Rechteckraster angeordnet, wie aus Fig. 9 ersichtlich. An ihren freien Enden weisen die Führungsbolzen 13 einen Anschlagkopf 14 auf, dessen Außendurchmesser größer ist als der Außendurchmesser des restlichen Führungsbolzens 13. Die Führungsbolzen 13 sind in vier Führungsbohrungen 15, die als jeweils zweites Führungselement der Führungseinrichtung im zweiten Werkzeugteil 3 ausgeführt sind, geführt. Die Führungsbohrungen 15 weisen jeweils eine Anschlagstufe 16 auf, mit welcher der Anschlagkopf 14 der Führungsbolzen 13 in der Offenstellung des Spritzgusswerkzeugs 1 zur Vorgabe eines maximalen Verlagerungsweges des ersten Werkzeugteils 2 zum zweiten Werkzeugteil 3 zusammenwirkt.

Auf der dem ersten Werkzeugteil 2 gegenüberliegenden Seite des zweiten Werkzeugteils 3 ist ein ebenfalls als Werkzeugplatte ausgeführtes drittes Werkzeugteil 17 des Spritzgusswerkzeugs 1 angeordnet. Das dritte Werkzeugteil 17 begrenzt in der Schließstellung des Spritzgusswerkzeugs 1 zusammen mit dem zweiten Werkzeugteil 3 eine zweite Spritzgussform 18, die entsprechend der ersten Spritzgussform 4 ausgebildet und geformt ist. Auch die Anordnung und der Verlagerungsantrieb der beiden zur zweiten Spritzgussform 18 gehörenden Schieber entspricht dem, was oben in Zusammenhang mit der ersten Spritzgussform 4 erläutert wurde, weswegen für diese, zur zweiten Spritzgussform 18 gehörenden Komponenten die gleichen Bezugsziffern verwendet werden wie für die entsprechenden Komponenten, die zur ersten Spritzgussform 4 gehören.

Der pneumatische Zylinder 8 zum Antrieb der Verlagerungsbewegung des ersten Schiebers 6 der zweiten Spritzgussform 18 ist am dritten Werkzeugteil 17 angeflanscht. Die Schrägstifte 12 zum Antrieb der Verlagerungsbewegung des zweiten Schiebers 9 der zweiten Spritzgussform 18 sind am zweiten Werkzeugteil 3 festgelegt.

Mit den Führungsbohrungen 15 fluchten entsprechende Führungsbohrungen 15 im dritten Werkzeugteil 17, in denen die Führungsbolzen 13 nahe der Schließstellung zwischen dem ersten Werkzeugteil 2 und dem zweiten Werkzeugteil 3 zusätzlich geführt sind.

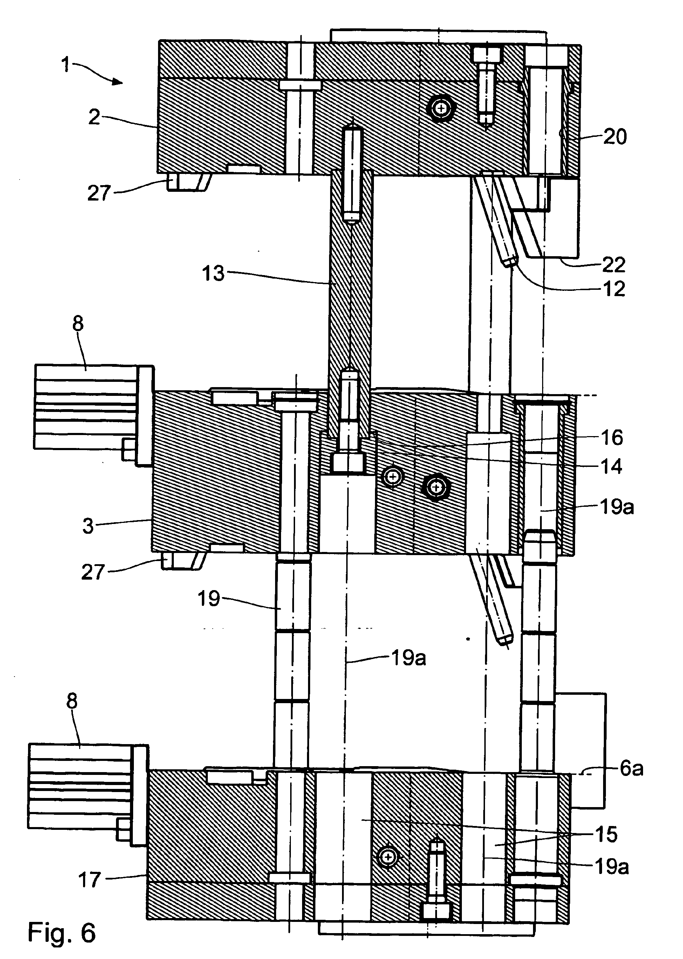

Zur Führung der Verlagerungsbewegung des zweiten Werkzeugteils 3 relativ zum dritten Werkzeugteil 17 zwischen der Schließstellung und einer in Fig. 6 gezeigten Offenstellung, in der ein gespritztes Kunststoffteil 1a aus der zweiten Spritzgussform 18 entnommen werden kann, dient eine von der Führungseinrichtung 13, 15 unabhängige Zusatz-Führungseinrichtung. Letztere umfasst als jeweils erste Zusatz-Führungselemente vier Zusatz-Führungsbolzen 19, die am dritten Werkzeugteil 17 festgelegt sind. Wie zum Beispiel in Fig. 10 dargestellt, sind die Zusatz-Führungsbolzen 19 ebenfalls in einem Rechteckraster angeordnet. Das Rechteckraster der Zusatz-Führungsbolzen 19 hat ein derart größeres Rastermaß, dass die Zusatz-Führungsbolzen 19 zu den Komponenten der Führungseinrichtung 13, 15 beabstandet sind.

Die durch die Zusatz-Führungseinrichtung geführte Verlagerungsbewegung hat eine Führungs-Hauptrichtung senkrecht zur Trennebene 6a, die parallel zur Richtung der von der Führungseinrichtung 13, 15 geführten Verlagerungsbewegung ist.

Die Zusatz-Führungsbolzen 19 sind in jeweils zweite Zusatz-Führungselemente der Zusatz-Führungseinrichtung darstellende Zusatz-Führungsbohrungen 20 im zweiten Werkzeugteil 3 geführt. Die Zusatz-Führungsbohrungen 20 sind von den Führungsbohrungen 15 beabstandet und zu diesen quer zur Führungs-Hauptrichtung nach außen versetzt. Die Längsachsen der Führungsbolzen 13 einerseits und der Zusatz-Führungsbolzen 19 andererseits geben in der Führungs-Hauptrichtung verlaufende Führungsachsen 19a der Führungseinrichtung 13, 15 einerseits und der Zusatz-Führungseinrichtung 19, 20 vor.

Zum Einspritzen fließfähiger Kunststoffmasse in die Spritzgussformen 4, 18 des Spritzgusswerkzeugs 1 dient ein insgesamt mit 21 bezeichneter Einspritzkanal. Dieser umfasst einen gemeinsamen Haupt-Einspritzkanal 22 für beide Spritzgussformen 4, 18, der auf Höhe des zweiten Werkzeugteils 3 und hälftig zwischen den Werkzeugteilen 2, 17 ausgeführt ist. Hin zu den beiden Spritzgussformen 4, 18 teilt sich der Haupt-Einspritzkanal 22 in zwei Einzelkanäle 23, 24 auf. Der zur ersten Spritzgussform 4 führende Einzelkanal 23 verläuft zunächst auf Höhe des zweiten Werkzeugteils 3 und wird dann ein Stück weit vom ersten Werkzeugteil 2 begrenzt.

Zur ersten Spritzgussform 4 hin mündet der Einspritzkanal 22 in eine Anspritzdüse 25 aus, die im zweiten Schieber 9 ausgeführt ist und in die erste Spritzgussform 4 ausmündet. Auch der zweite Schieber 9 der zweiten Spritzgussform 18 weist die Anspritzdüse 25 auf.

Der zweite Einzelkanal 24 verläuft zunächst ebenfalls auf Höhe des zweiten Werkzeugteils 3 und wird dann ein Stück weit vom dritten Werkzeugteil 17 begrenzt. Im weiteren Verlauf mündet der Einzelkanal 24 in die Anspritzdüse 25 des zweiten Schiebers 9 der zweiten Spritzgussform 18 aus.

Das in Fig. 11 dargestellte Eckverbindungsteil 1 a wird folgendermaßen spritzgegossen: Zunächst liegt das Spritzgusswerkzeug 1 in der Offenstellung nach Fig. 3 vor, sodass die nicht dargestellten Kunststoffleisten in Aufnahmenuten 26 eingelegt werden können, die in den Oberseiten des zweiten Werkzeugteils 3 und des dritten Werkzeugteils 17 ausgeführt sind und die Spritzgussformen 4, 18 nach außen hin fortsetzen. Zusammen mit entsprechenden Gegennuten im jeweils gegenüberliegenden Werkzeugteil 2, 3 sind die Aufnahmenuten 26 komplementär zu den einzulegenden Kunststoffleisten geformt. Insgesamt werden also vier Kunststoffleisten in die zugehörigen Aufnahmenuten 26 eingelegt. Anschließend wird das Spritzgusswerkzeug 1 geschlossen. Dabei erreicht das Spritzgusswerkzeug 1 zunächst eine Zwischenstellung nach Fig. 5, bei der die untere Spritzgussform 18 schon geschlossen und die obere Spritzgussform 4 noch geöffnet ist. Beim Schließen der zweiten Spritzgussform 18 dringen die Schrägstifte 12, die unten am zweiten Werkzeugteil 2 festgelegt sind, in die entsprechenden Stiftführungsbohrungen 11 des zweiten Schiebers 9 ein und verlagern diesen von der Offen- in die Begrenzungsstellung. In der Schließstellung der zweiten Spritzgussform 18 drücken Anschlagkörper 27, die ebenfalls an der Unterseite des zweiten Werkzeugteils 3 festgelegt sind, an Schrägflächen 28 des ersten Schiebers 6 der zweiten Spritzgussform 18, sodass die Schieber 6, 9 jeweils in der Begrenzungsstellung vorgespannt sind.

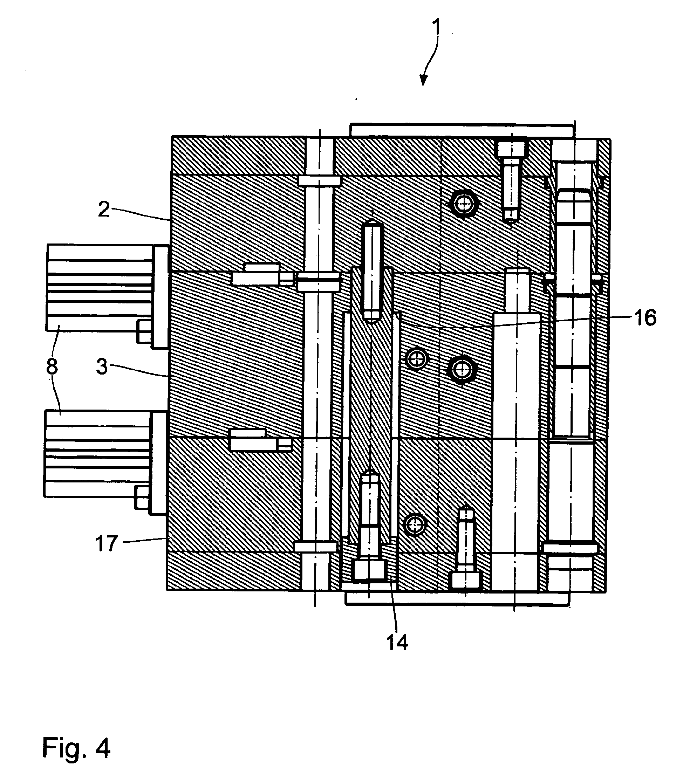

Beim Überführen des Spritzgusswerkzeugs 1 von der in Fig. 5 dargestellten Zwischenstellung in die Schließstellung nach Fig. 4 findet, entsprechend dem oben Ausgeführten, ein Verlagern und Vorspannen der Schieber 6, 9 der ersten Spritzgussform 4 statt. Die Spritzgussformen 4, 18 sind nunmehr allseitig abgedichtet. Die Schieber 6, 9 und die Werkzeugteile 2, 3 bzw. 3, 17 umschließen nun unter klemmender Vorspannung die eingelegten Kunststoffleisten komplett. Diese Klemmung verhindert, dass die Kunststoffleisten beim Spritzen aus den Spritzgussformen 4, 18 unerwünscht herausgeschoben werden.

Anschließend wird fließfähige Kunststoffmasse in den Einspritzkanal 21 eingespritzt. Über die Anspritzdüsen 25 werden die Spritzgussformen 4, 18 befüllt. Anschließend härtet die Kunststoffmasse aus. Nach dem Aushärten wird das Spritzgusswerkzeug 1 von der Schließstellung nach Fig. 4 über die Zwischenstellung nach Fig. 5 in die Offenstellung nach Fig. 6 überführt. Dabei kommen die Schrägflächen 28 der ersten Schieber 6 von den Anschlagkörpern 27 frei und die Schieber 9 werden durch das Zusammenwirken der Schrägstifte 12 mit den Stiftführungsbohrungen 11 von der Begrenzungs- in die Offenstellung überführt. Durch Betätigen der pneumatischen Zylinder 8 werden sodann auch die ersten Schieber 6 von der Begrenzungs- in die Offenstellung überführt. Die beiden fertig gespritzten Eckverbindungsteile 1 a können dann zusammen mit den hieran angeformten Kunststoffleisten aus den Spritzgussformen 4, 18 entnommen werden. Bei dieser Entnahme stören weder die Führungseinrichtung 13, 15 noch die Zusatz-Führungseinrichtung 19, 20, da alle Führungseinrichtungen 13, 15, 19, 20 zur Führung der Verlagerungsbewegung zwischen den Werkzeugteilen 2, 3, 17 quer zur Führungs-Hauptrichtung der Verlagerungsbewegung versetzt auf ein und derselben Seite der Spritzgussformen 4, 18 angeordnet sind.

## Patentansprüche

1. Spritzgusswerkzeug (1) zur Herstellung von Kunststoffteilen (1a)
- mit einem ersten Werkzeugteil (2),
- mit einem zweiten Werkzeugteil (3), welches in Schließstellung des Spritzgusswerkzeugs (1) zusammen mit dem ersten Werkzeugteil (2) eine Spritzgussform (4) begrenzt.
- mit einer Führungseinrichtung (13, 15), welche eine Verlagerungsbewegung des ersten Werkzeugteils (2) zum zweiten Werkzeugteil (3) zwischen der Schließstellung und einer Offenstellung führt, in welcher ein gespritztes Kunststoffteil (1 a) aus der Spritzgussform (4) entnommen werden kann, und ein erstes Führungselement (13), welches am ersten Werkzeugteil (2) angeordnet ist, und ein zweites, mit dem ersten Führungselement (13) zusammenwirkendes Führungselement (15) aufweist, welches am zweiten Werkzeugteil (3) angeordnet ist, mit
- einem dritten Werkzeugteil (17), welches auf der dem ersten Werkzeugteil (2) gegenüberliegenden Seite des zweiten Werkzeugteils (3) angeordnet ist und in Schließstellung des Spritzgusswerkzeugs (1) zusammen mit dem zweiten Werkzeugteil (3) eine weitere Spritzgussform (18) begrenzt,
- einer Zusatz-Führungseinrichtung (19, 20), welche eine Verlagerungsbewegung des zweiten Werkzeugteils (3) zum dritten Werkzeugteil (17) zwischen der Schließstellung und einer Offenstellung führt, in welcher ein gespritztes Kunststoffteil (1a) aus der weiteren Spritzgussform (18) entnommen werden kann, und ein erstes Zusatz-Führungselement (20), welches am zweiten Werkzeugteil (3) angeordnet ist, und ein zweites, mit dem ersten Zusatz-Führungselement (20) zusammenwirkendes Zusatz-Führungselement (19) aufweist, welches am dritten Werkzeugteil (17) angeordnet ist,
- mit einem zufuhrseitig gemeinsamen Haupt-Einspritzkanal (22) für beide Spritzgussformen (4, 18), der sich hin zu den Spritzgussformen (4, 18) in zwei Einzelkanäle (23, 24) aufteilt,
**dadurch gekennzeichnet, dass** der Haupt-Einspritzkanal (22) hälftig zwischen dem ersten (2) und dem dritten Werkzeugteil ausgeführt ist.

2. Spritzgusswerkzeug nach Anspruch 1, **dadurch gekennzeichnet, dass** die beiden Führungseinrichtungen (13, 15, 19, 20) die gleiche Führungs-Hauptrichtung haben, wobei Führungsachsen (19a) der Führungseinrichtung (13, 15) und der Zusatz-Führungseinrichtung (19, 20) quer zur Führungs-Hauptrichtung gegeneinander versetzt sind.

3. Spritzgusswerkzeug nach Anspruch 1 oder 2, **dadurch gekennzeichnet, dass** die Führungseinrichtungen (13, 15, 19, 20) als Führungselement (13, 19) mindestens einen Führungsbolzen aufweisen, der in einer das jeweils andere Führungselement (15, 20) darstellenden Führungsbohrung geführt ist.

4. Spritzgusswerkzeug nach Anspruch 3, **dadurch gekennzeichnet, dass** der Führungsbolzen (13) mindestens einer Führungseinrichtung (13, 15, 19, 20) an seinem freien Ende einen Anschlagkopf (14) aufweist, der zur Vorgabe eines maximalen Verlagerungsweges mit einer Anschlagstufe (16) der Führungsbohrung (15) zusammenwirkt.

5. Spritzgusswerkzeug nach einem der Ansprüche 1 bis 4, **dadurch gekennzeichnet, dass** mindestens eine der Spritzgussformen (4, 18) mindestens einen Schieber (6, 9) aufweist, der zwischen einer Begrenzungsstellung und einer Offenstellung verlagerbar ist, wobei diese Verlagerungsbewegung relativ zu einem der Werkzeugteile (3, 17) geführt ist, und wobei der Schieber (6, 9)
- in der Begrenzungsstellung die Spritzgussform (4, 18) begrenzt und
- in der Offenstellung eine Entnahme des gespritzten Kunststoffteils (1 a) aus der Spritzgussform (4, 18) erlaubt.

6. Spritzgusswerkzeug nach Anspruch 5, **gekennzeichnet durch** einen pneumatischen Zylinder (8) zum Antrieb der Verlagerungsbewegung des mindestens einen Schiebers (6, 9).

7. Spritzgusswerkzeug nach einem der Ansprüche 4 bis 6, **gekennzeichnet durch** einen mit einer Stiftführungsbohrung (11) des Schiebers (9) zusammenwirkenden Schrägstift (12), der an dem die Spritzgussform (4, 18) begrenzenden Werkzeugteil (2, 3) festgelegt ist, welches die Verlagerungsbewegung des dem Schrägstift (12) zugeordneten Schiebers (9) nicht führt, zum Antrieb der Verlagerungsbewegung des mindestens einen Schiebers (9).

8. Werkzeug nach einem der Ansprüche 1 bis 7 zum Herstellen von zwei Kunststoffleisten verbindenden Spritzguss-Eckverbindungsteilen (1a), **dadurch gekennzeichnet, dass** alle Führungseinrichtungen (13, 15, 19, 20) zur Führung der Verlagerungsbewegung zwischen den Werkzeugteilen (2, 3, 17) quer zur Verlagerungsbewegung auf einer Seite der Spritzgussformen (4, 18) versetzt zu diesen angeordnet sind.

## Claims

1. Injection moulding tool (1) for producing plastic parts (1a)
- comprising a first tool part (2),
- comprising a second tool part (3), which together with the first tool part (2) delimits an injection mould (4) in the closed position of the injection moulding tool (1),
- comprising a guiding device (13, 15), which guides a displacing movement of the first tool part (2) with respect to the second tool part (3) between the closed position and an open position, in which a moulded plastic part (1a) can be removed from the injection mould (4), and a first guiding element (13), which is arranged on the first tool part (2), and a second guiding element (15), which is arranged on the second tool part (3) and interacts with the first guiding element (13),
- comprising a third tool part (17), which is arranged on the side of the second tool part (3) that is opposite from the first tool part (2) and together with the second tool part (3) delimits a further injection mould (18) in the closed position of the injection moulding tool (1),
- an additional guiding device (19, 20), which guides a displacing movement of the second tool part (3) with respect to the third tool part (17) between the closed position and an open position, in which a moulded plastic part (1a) can be removed from the further injection mould (18), and a first additional guiding element (20), which is arranged on the second tool part (3), and a second additional guiding element (19), which is arranged on the third tool part (17) and interacts with the first additional guiding element (20),
- comprising a common main injection runner (22) on the feed side for both injection moulds (4, 18), which is divided into two individual runners (23, 24) towards the injection moulds (4, 18),
**characterized in that** the main injection runner (22) is divided in half between the first tool part (2) and the third tool part.

2. Injection moulding tool according to Claim 1, **characterized in that** the two guiding devices (13, 15, 19, 20) have the same main guiding direction, guiding axes (19a) of the guiding device (13, 15) and of the additional guiding device (19, 20) being offset with respect to each other transversely to the main guiding direction.

3. Injection moulding tool according to Claim 1 or 2, **characterized in that** the guiding devices (13, 15, 19, 20) have as a guiding element (13, 19) at least one guiding bolt, which is guided in a guiding bore respectively representing the other guiding element (15, 20).

4. Injection moulding tool according to Claim 3, **characterized in that** the guiding bolt (13) of at least one guiding device (13, 15, 19, 20) has at its free end a stop head (14), which interacts with a stop step (16) of the guiding bore (15) to preset a maximum displacing distance.

5. Injection moulding tool according to one of Claims 1 to 4, **characterized in that** at least one of the injection moulds (4, 18) has at least one slide (6, 9), which is displaceable between a delimiting position and an open position, this displacing movement being guided in relation to one of the tool parts (3, 17), and the slide (6, 9)
- delimiting the injection mould (4, 18) in the delimiting position and
- allowing removal of the moulded plastic part (1a) from the injection mould (4, 18) in the open position.

6. Injection moulding tool according to Claim 5, **characterized by** a pneumatic cylinder (8) for driving the displacing movement of the at least one slide (6, 9).

7. Injection moulding tool according to one of Claims 4 to 6, **characterized by** an angled pin (12), which is fixed on the tool part (2, 3) delimiting the injection mould (4, 18) but not guiding the displacing movement of the slide (9) assigned to the angled pin (12) and interacts with a pin guiding bore (11) of the slide (9) for driving the displacing movement of the at least one slide (9).

8. Tool according to one of Claims 1 to 7 for producing injection-moulded corner connecting parts (1a), connecting two plastic strips, **characterized in that** all the guiding devices (13, 15, 19, 20) for guiding the displacing movement between the tool parts (2, 3, 17) are arranged offset transversely to the displacing movement on one side of the injection moulds (4, 18) with respect to the latter.

## Revendications

1. Outil de moulage par injection (1) pour produire des pièces en matière plastique (1a),
- avec une première partie d'outil (2),
- avec une deuxième partie d'outil (3) qui, dans la position de fermeture de l'outil de moulage par injection (1), délimite conjointement avec la première partie d'outil (2) un moule d'injection (4),
- avec un dispositif de guidage (13, 15) qui guide un mouvement de déplacement de la première partie d'outil (2) par rapport à la deuxième partie d'outil (3) entre la position de fermeture et une position d'ouverture, dans laquelle une partie en matière plastique (1a) moulée par injection peut être enlevée du moule d'injection (4) et qui présente un premier élément de guidage (13) qui est disposé sur la première partie d'outil (2), et un deuxième élément de guidage (15) coopérant avec le premier élément de guidage (13), et qui est disposé sur la deuxième partie d'outil (3),
- avec une troisième partie d'outil (17) qui est disposée du côté de la deuxième partie d'outil (3) opposé à la première partie d'outil (2) et qui, dans la position de fermeture de l'outil de moulage par injection (1), délimite conjointement avec la deuxième partie d'outil (3) un autre moule d'injection (18),
- avec un dispositif de guidage supplémentaire (19, 20) qui guide un mouvement de déplacement de la deuxième partie d'outil (3) par rapport à la troisième partie d'outil (17) entre la position de fermeture et une position d'ouverture, dans laquelle une pièce en matière plastique moulée par injection peut être enlevée du moule d'injection supplémentaire (18), et qui présente un premier élément de guidage supplémentaire (20) qui est disposé sur la deuxième partie d'outil (3) et un deuxième élément de guidage supplémentaire (19) coopérant avec le premier élément de guidage supplémentaire (20) et qui est disposé sur la troisième partie d'outil (17),
- avec un canal d'injection principal (22) commun, du côté de l'alimentation, pour les deux moules d'injection (4, 18), qui se divise en deux canaux individuels (23, 24) vers les moules d'injection (4, 18),
**caractérisé en ce que** le canal d'injection principal (22) est réalisé pour moitié entre la première (2) et la troisième partie d'outil.

2. Outil de moulage par injection selon la revendication 1, **caractérisé en ce que** les deux dispositifs de guidage (13, 15, 19, 20) ont la même direction principale de guidage, des axes de guidage (19a) du dispositif de guidage (13, 15) et du dispositif de guidage supplémentaire (19, 20) étant décalés l'un par rapport à l'autre transversalement à la direction principale de guidage.

3. Outil de moulage par injection selon la revendication 1 ou 2, **caractérisé en ce que** les dispositifs de guidage (13, 15, 19, 20) présentent, en tant qu'élément de guidage (13, 19), au moins un boulon de guidage, qui est guidé dans un alésage de guidage constituant l'autre élément de guidage respectif (15, 20).

4. Outil de moulage par injection selon la revendication 3, **caractérisé en ce que** le boulon de guidage (13) d'au moins un dispositif de guidage (13, 15, 19, 20) présente à son extrémité libre une tête de butée (14) qui, pour prédéfinir une course de décalage maximale, coopère avec un gradin de butée (16) de l'alésage de guidage (15).

5. Outil de moulage par injection selon l'une quelconque des revendications 1 à 4, **caractérisé en ce qu'**au moins l'un des moules d'injection (4, 18) présente au moins un coulisseau (6, 9) qui peut être déplacé entre une position de limitation et une position d'ouverture, ce mouvement de déplacement étant guidé par rapport à l'une des pièces d'outil (3, 17), et le coulisseau (6, 9)
- délimitant le moule d'injection (4, 18) dans la position de limitation et
- permettant l'enlèvement de la pièce en matière plastique moulée par injection (1a) hors du moule d'injection (4, 18) dans la position d'ouverture.

6. Outil de moulage par injection selon la revendication 5, **caractérisé par** un cylindre pneumatique (8) pour l'entraînement du mouvement de déplacement de l'au moins un coulisseau (6, 9).

7. Outil de moulage par injection selon l'une quelconque des revendications 4 à 6, **caractérisé par** une goupille oblique (12) coopérant avec un alésage de guidage de goupille (11) du coulisseau (9), qui est fixée sur la partie d'outil (2, 3) délimitant le moule d'injection (4, 18), qui ne guide pas le mouvement de déplacement du coulisseau (9) associé à la goupille oblique (12), pour l'entraînement du mouvement de déplacement de l'au moins un coulisseau (9).

8. Outil selon l'une quelconque des revendications 1 à 7, pour la fabrication de deux angles de connexion moulés par injection (1a) reliant deux profilés en matière plastique, **caractérisé en ce que** tous les dispositifs de guidage (13, 15, 19, 20) pour le guidage du mouvement de déplacement entre les pièces d'outil (2, 3, 17) sont disposés transversalement au mouvement de déplacement d'un côté des moules d'injection (4, 18) de manière décalée par rapport à ceux-ci.
